# EUROPEAN PATENT SPECIFICATION

(11) **EP 2 167 435 B1**
(45) Date of publication and mention of the grant of the patent: **09.03.2011**
(21) Application number: 08741664.0
(22) Date of filing: 24.04.2008
(51) Int. Cl.: C03B 23/025

(54) **A METHOD AND APPARATUS FOR FORMING A DOUBLE-CURVED PANEL FROM A FLAT PANEL**
VERFAHREN UND VORRICHTUNG ZUR HERSTELLUNG EINER DOPPELT GEKRÜMMTEN SCHEIBE AUS EINER FLACHEN SCHEIBE
PROCÉDÉ ET APPAREIL DE FORMATION D'UN PANNEAU DOUBLEMENT INCURVÉ À PARTIR D'UN PANNEAU PLAT

(30) Priority: 12.06.2007 NL 2000699
(43) Date of publication of application: 31.03.2010
(73) Proprietor: Technische Universiteit Delft, 2628 CN Delft (NL)
(72) Inventor: RIETBERGEN, Daan, NL-2628 JV Delft (NL); VOLLERS, Karel Jan, NL-1054 KE Amsterdan (NL)
(74) Representative: Van Breda, Jacobus
(86) International application number: PCT/NL2008/050243
(87) International publication number: WO 2009/002158

(56) References cited:
- EP-A- 0 440 884
- EP-A- 0 885 851
- GB-A- 191 004 680

## Description

In the first place the invention relates to a method for forming a double-curved panel from a flat panel, which comprises processing a plastically deformable flat panel or rendering the flat panel plastically deformable to enable it to mould itself to a predetermined shape.

From the European patent publication EP-A-0 440 884 a method is known for forming a single-curved glass panel from a flat glass panel supported by a primary supporting construction, wherein after heating, the primary supporting construction is deflected and the flat glass panel moulds itself to a plurality of curved rods that, after the deflection of the primary supporting construction, as a secondary supporting construction support the glass panel. Heating provides the glass panel with the desired plastic deformability.

The method known from the European patent publication EP-A-0 440 884 is not suitable for forming a double-curved glass panel.

It should be noted, that the invention may be employed with glass panels, but also with panels made of a different material such as, for example, plastic, a composite material or metal.

In order to provide a method for forming a double-curved glass panel, it is usual practice to use moulds that have been shaped in accordance with the shape eventually desired for the glass panel. As the glass panel before it has moulded itself to the mould starts out flat, the manufacture of the double-curved glass panel involves particular problems, with breakage being a frequent occurrence. In practice it happens regularly that a pane has to be made anew up to ten times before the resulting double-curved glass panel is acceptable.

One of the objects of the invention is to provide a reliable method for forming a double-curved panel from a flat panel, and by which the desired double-curved panel can be made available at lower costs than is the case with the prior art technique.

To this end the method according to the invention is characterized by one or several of the appended method claims.

In a first aspect of the invention, the method for forming a double-curved panel from a flat panel is characterized in that the shape is obtained by a primary supporting construction cooperating with a secondary supporting construction, wherein the primary supporting construction may or may not be adjustable to a fixed position that determines the shape, and the secondary supporting construction is adjustable between a starting position in which it supports the flat panel, and a finishing position in which the secondary supporting construction supports the double-curved panel, while said supporting construction rests on the primary supporting construction and is shaped in accordance with the shape of the primary supporting construction, wherein the adjustment from the starting position to the finishing position occurs at least subject to the distribution of the gravitational force exerted on the secondary supporting construction by the panel while this is plastically deformable. If desired, the adjustment of the secondary supporting construction may be aided in another way, for example, by additional pressure means, or by providing a partial vacuum under the panel being supported by the secondary supporting construction.

When the finishing position is reached, the plastic deformability of the panel may be terminated or reduced by a suitable process. This process may involve, for example, terminating the heating at a glass panel, or fixing a flexible plastic panel by means of UV radiation. However, which process and which material is used is of minor importance as long as the essence of the invention, being embodied in the cooperation between the primary supporting construction and the secondary supporting construction, is employed.

The method proposed according to the invention facilitates an efficient production method for shaping the double-curved panel and making a mould, as in the prior art, becomes superfluous while less glass is being used in the manufacture of a double-curved glass panel because glass breakage is significantly reduced.

The invention is also embodied in an apparatus with which this production method for forming a double-curved panel from a flat panel can be executed effectively.

To this end the apparatus according to the invention is characterized by one or several of the appended apparatus claims.

It is acknowledged that GB-A-04680 discloses an apparatus that comprises a primary supporting construction that has a time-invariable form that corresponds to a desirable curve of the panel, as well as a secondary supporting construction that is designed to rest on the primary supporting construction and, subject to a distribution of gravitational force from a panel resting on the secondary supporting construction, is deformable into a shape that corresponds to the time-invariable shape of the primary supporting construction. This known apparatus is however unsuited for manufacturing a double-curved panel.

The apparatus of the invention is embodied with a primary supporting construction that may or may not be adjustable to the desired time-invariable form, and wherein the primary supporting construction can be moved upward or the secondary supporting construction can be lowered so as to arrange that the secondary supporting construction comes to rest on the primary supporting construction.

The effectiveness and the simple realisation of the desired double-curved shape is obtained in particular by the fact that the primary supporting construction and the secondary supporting construction define cross-wise intersecting supporting lines.

The above described starting points provide a basis for various ways in which to realise both the method and the apparatus in a simple and suitable manner.

In a first embodiment, the primary supporting construction may be provided with a plurality of additional construction elements, which at the upper side define a plurality of first supporting lines, and that all of these first supporting lines determined by the construction elements lie in an imaginary plane having the predetermined shape.

This primary supporting construction is then formed, for example, by a number of steel plates manufactured manually or computer-controlled, which are placed at some distance from each other and together fulfil a supporting function for the secondary supporting construction described above.

The secondary supporting construction in turn is then preferably formed like a mat comprised of a plurality of flexible rods disposed next to each other. These rods are kept at a distance from each other, for example, by coupling them to each other or by lodging each rod in grooves provided at the top side of the primary supporting construction. This mat of flexible rods has to be constructed such as to allow the rods to readily deform under the influence of the thermo-plastically deformable panel resting on the secondary supporting construction, allowing the same to shape itself to the desired double-curved shape.

In order to be able to assume the desired double-curved shape embodied in the construction elements of the primary supporting construction, it is desirable for the plurality of flexible rods of the secondary supporting construction to be placed cross-wise (preferably orthogonally) on the plurality of first bearing lines of the construction elements of the primary supporting construction, which rods thus form a plurality of second bearing lines, which serve to support the panel.

The invention, whose essence is embodied in the appended claims, will be further elucidated below, with reference to the drawing.

The drawing shows in:
- Fig. 1, a primary supporting construction as can be used with the method according to the invention;
- Fig. 2, the primary supporting construction according to Fig. 1, above which is placed a secondary supporting construction in a starting position, supporting a flat glass plate,
- Fig. 3, the primary supporting construction and the secondary supporting construction with the glass plate resting thereon, while these have been moved to the finishing position, and
- Fig. 4, the apparatus shown in Fig. 3, wherein the glass plate is shown to be transparent.

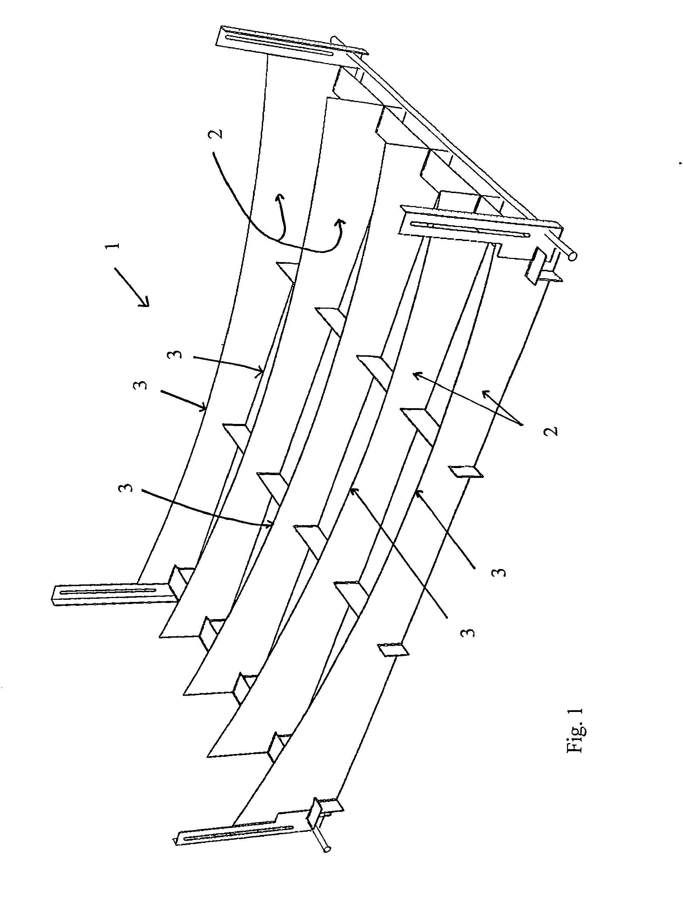

Fig. 1 shows that the primary supporting construction 1 is formed by steel partitions 2 whose upper sides define bearing lines 3 that all lie in an imaginary plane exhibiting the predetermined desired double-curved shape. To this end each of the separate partitions 2 is provided with a single-curved top side 3, derived from the desired double curve created by all the partitions 2 together. Alternatively it is also possible to embody this primary supporting construction 1 to be adjustable for obtaining the bearing lines 3 that correspond to the desired double-curved shape. It is then also possible - as opposed to what is shown in the figures - to begin with a flat starting position of the primary supporting construction 1 with the same supporting the secondary supporting construction with the (glass) panel and, after the panel is sufficiently heated, to adjust the primary supporting construction so as to obtain the above-mentioned bearing lines 3.

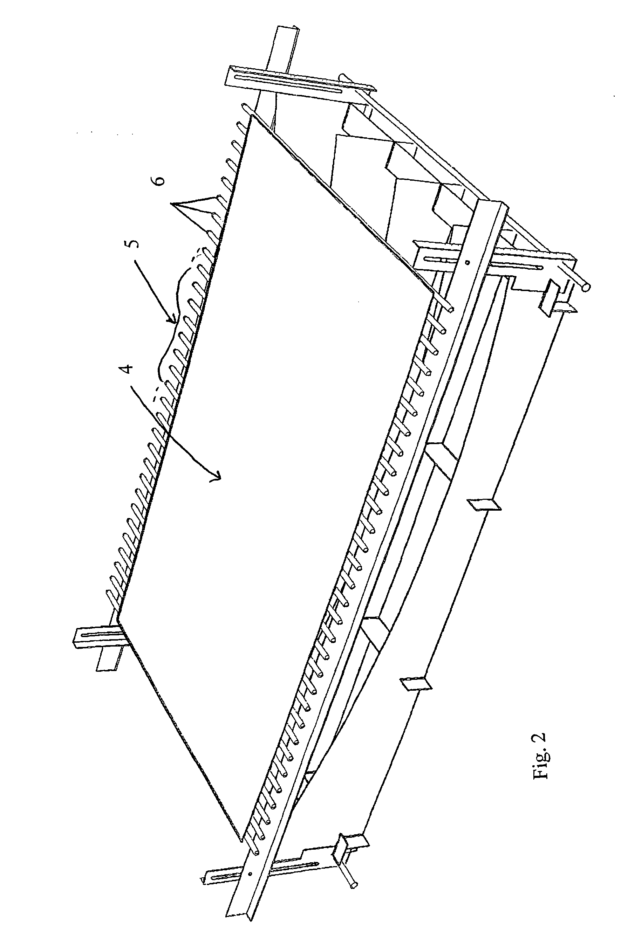

In Fig. 2 a flat glass plate 4 rests on a likewise still flat mat 5 formed by the flexible rods 6 of a secondary supporting construction 5 located above the primary supporting construction 1. In this position the glass plate 4 can be heated and, when the glass plate 4 has become sufficiently bendable, the secondary supporting construction 5 may be lowered such that the rods 6 defining bearing lines for the glass plate 4, come to rest on the orthogonally oriented bearing lines 3 that are determined by the partitions 2 of the primary supporting construction 1. It will be obvious that instead of lowering the rods 6 with the glass plate 4 resting thereon, the primary supporting construction 1 may also be moved upward.

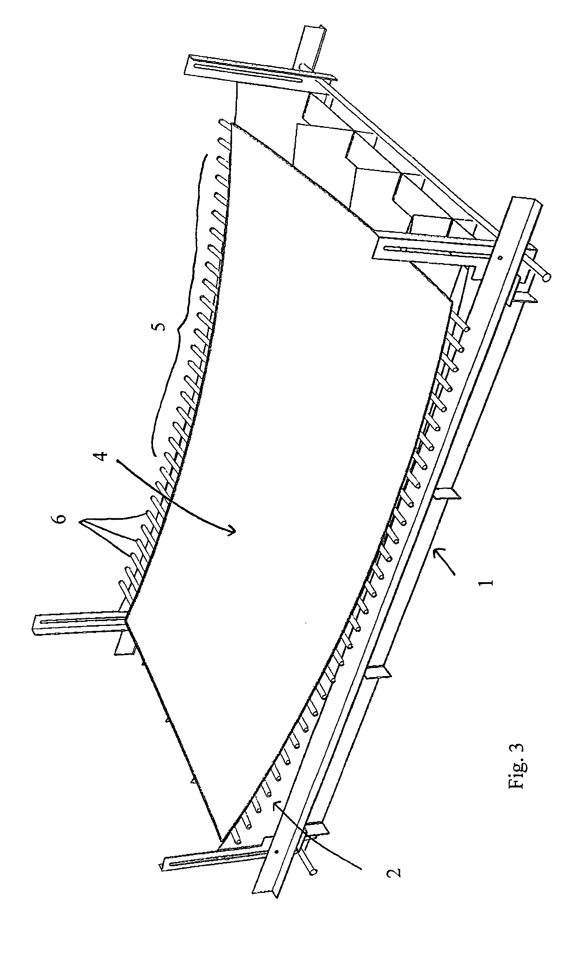

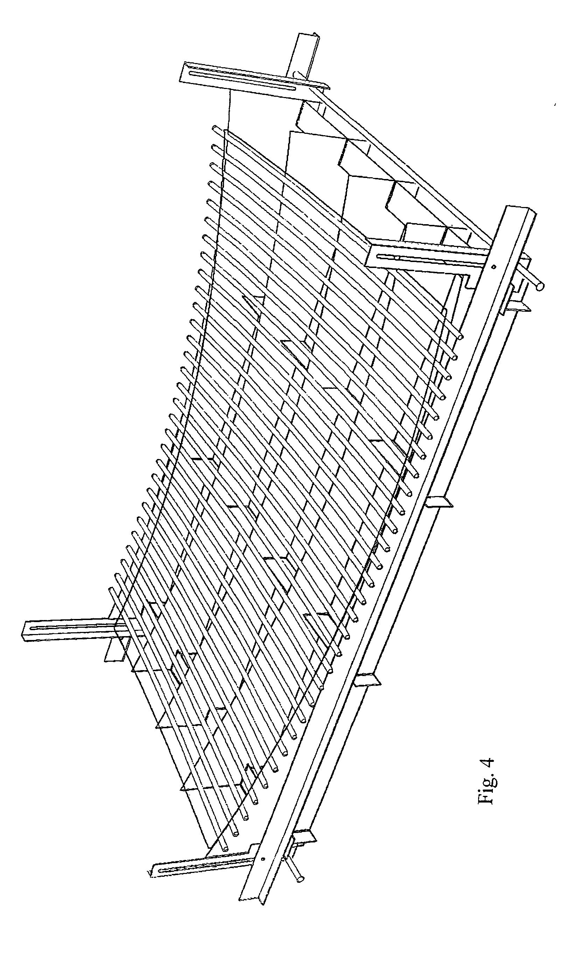

Deformation of the rods 6 of the secondary supporting construction 5 occurs subject to the distribution of gravitational forces exerted on the rods 6 of the secondary supporting construction 5 during heating of the glass panel 4. This distribution of gravitational force makes that, as show in Fig. 3 and even more clearly in Fig. 4, these rods 6 come to rest on all of the partitions 2 of the primary supporting construction 1. The rods 6 of the secondary supporting construction 5 will over their length assume an orientation that lies almost completely in the plane of the predetermined double-curved shape embodied in the primary supporting construction 1. Accordingly, the glass panel 4 also substantially assumes this desired double-curved shape.

If it is desirable to optimise the accuracy of the double-curved shape of the panel 4, it is possible to increase the density of the bearing lines of the primary 1 and secondary 5 supporting construction.

Within the scope of the invention it is also possible for a tertiary supporting construction to be added to the apparatus or to be used with the method, respectively, which cooperates with the secondary supporting construction in a manner corresponding to the one explained above regarding the primary and the secondary supporting construction.

## Claims

1. A method for forming a double-curved panel from a flat panel, which comprises processing a plastically deformable flat panel or rendering the flat panel plastically deformable to enable it to mould itself to a predetermined shape that is obtained by a primary supporting construction (1) cooperating with a secondary supporting construction (5), **characterized in that** the primary supporting construction (1) may or may not be adjustable to an invariant position that determines the shape, and the secondary supporting construction (5) is adjustable between a starting position in which it supports the flat panel (4), and a finishing position in which the secondary supporting construction (5) supports the double-curved panel (4), while said supporting construction (5) rests on the primary supporting construction (1) and is shaped in accordance with the shape of the primary supporting construction (1), wherein the adjustment from the starting position to the finishing position occurs at least subject to the distribution of the gravitational force exerted on the secondary supporting construction (5) by the panel (4) while this is plastically deformable.

2. A method according to claim 1, **characterized in that** the primary supporting construction (1) and the secondary supporting construction (5) substantially define cross-wise intersecting supporting lines (3, 6).

3. A method according to claim 1 or 2, **characterized in that** the primary supporting construction (1) may be provided with a plurality of additional construction elements (2), which at the upper side define a plurality of first supporting lines (3), and that all of these first supporting lines (3) determined by the construction elements (2) lie in an imaginary plane having the predetermined shape.

4. A method according to one of the claim 1-3, **characterized in that** the secondary supporting construction is a mat comprising a plurality of flexible rods (6) disposed next to each other.

5. A method according to claim 4, **characterized in that** the plurality of flexible rods (6) are placed cross-wise on the plurality of first bearing lines (3) of the construction elements (2) of the primary supporting construction (1), thus forming a plurality of second bearing lines (6), which serve to support the panel (4)

6. An apparatus for forming a double-curved panel from a flat panel, wherein the same comprises a primary supporting construction (1) that may or may not be adjustable to a time-invariable form that corresponds to a desirable double curve of the panel (4), as well as a secondary supporting construction (5) that is designed to rest on the primary supporting construction (1) and, subject to at least a distribution of gravitational force from a panel (4) resting on the secondary supporting construction (5), is deformable into a shape that corresponds to the time-invariable shape of the primary supporting construction (1), **characterized in that** the primary supporting construction (1) can be moved upward or the secondary supporting construction (5) can be lowered so as to arrange that the secondary supporting construction (5) comes to rest on the primary supporting construction (1).

7. An apparatus according to claim 6, **characterized in that** the primary supporting construction (1) is provided with a plurality of additional construction elements (2), which at the upper side define a plurality of first supporting lines (3), and that all of these first supporting lines (3) determined by the construction elements (2) lie in an imaginary plane having the predetermined shape.

8. An apparatus according to claim 6 or 7, **characterized in that** the secondary supporting construction is a mat (5) comprised of a plurality of flexible rods (6) disposed next to each other.

9. An apparatus according to claim 8, **characterized in that** the plurality of flexible rods (6) are placed cross-wise on the plurality of first bearing lines (3) of the construction elements (2) of the primary supporting construction (1), which rods thus form a plurality of second bearing lines (6), which serve to support the panel (4).

## Patentansprüche

1. Verfahren zum Bilden eines doppelgekrümmten Paneels aus einem flachen Paneel, welches aufweist Bearbeiten eines plastisch verformbaren flachen Paneels oder Plastisch-Verformbar-Machen des flachen Paneels, so dass es sich selbst in eine vorbestimmte Gestalt formen kann, die von einer primären Stützkonstruktion erzielt ist, die mit einer sekundären Stützkonstruktion (5) zusammenwirkt, **dadurch gekennzeichnet, dass** die primäre Stützkonstruktion (1) in eine unveränderliche Position einstellbar sein kann oder nicht kann, die die Gestalt bestimmt, und die sekundäre Stützkonstruktion (5) zwischen einer Startposition, in welcher sie das flache Paneel (4) abstützt, und einer Endposition einstellbar ist, in welcher die sekundäre Stützkonstruktion (5) das doppelgekrümmte Paneel (4) abstützt, wobei die Stützkonstruktion (5) auf der primären Stützkonstruktion (1) aufliegt und gemäß der Gestalt der primären Stützkonstruktion (1) gestaltet ist, wobei die Einstellung von der Startposition in die Endposition zumindest gemäß der Verteilung der Gravitationskraft erfolgt, die auf die sekundäre Stützkonstruktion (5) durch das Paneel (4) ausgeübt wird, währen dieses plastisch verformbar ist.

2. Verfahren gemäß Anspruch 1, **dadurch gekennzeichnet, dass** die primäre Stützkonstruktion (1) und die sekundäre Stützkonstruktion (5) im Wesentlichen sich quer schneidende Stützlinien definieren.

3. Verfahren gemäß Anspruch 1 oder 2, **dadurch gekennzeichnet, dass** die primäre Stützkonstruktion (1) mit einer Mehrzahl von zusätzlichen Konstruktionselementen (2) ausgestattet sein kann, die an der oberen Seite eine Mehrzahl von ersten Stützlinien (3) definieren, und dass alle von diesen ersten Stützlinien (3), die von den Konstruktionselementen (2) bestimmt werden, in einer imaginären Fläche liegen, die eine vorbestimmte Gestalt hat.

4. Verfahren gemäß einem der Ansprüche 1 bis 3, **dadurch gekennzeichnet, dass** die sekundäre Stützkonstruktion eine Matte ist, die eine Mehrzahl von flexiblen Stangen (6) aufweist, die nebeneinander angeordnet sind.

5. Verfahren gemäß Anspruch 4, **dadurch gekennzeichnet, dass** die Mehrzahl von flexiblen Stangen (6) quer an der Mehrzahl von ersten Auflagerlinien (3) der Konstruktionselemente (2) der primären Stützkonstruktion (1) platziert sind, **dadurch** eine Mehrzahl von zweiten Auflagerlinien (6) bildend, die dazu dienen, um das Panel (4) zu abstützen.

6. Vorrichtung zum Bilden eines doppelgekrümmten Paneels aus einem flachen Paneel, wobei diese aufweist eine primäre Stützkonstruktion (1), die in eine zeit-unveränderliche Form einstellbar sein kann oder nicht kann, die einer gewünschten Doppelkrümmung des Paneels (4) entspricht, sowie eine sekundäre Stützkonstruktion (5), die gestaltet ist, um sich auf der primären Stützkonstruktion (1) aufzuliegen, und, zumindest gemäß einer Verteilung der Gravitationskraft von einem Paneel (4), das auf der zweiten sekundären Stützkonstruktion (5) aufliegt, in eine Gestalt formbar ist, die der zeit-unveränderlichen Gestalt der primären Stützkonstruktion (1) entspricht, **dadurch gekennzeichnet, dass** die primäre Stützkonstruktion (1) nach oben bewegt werden kann oder die sekundäre Stützkonstruktion (5) nach unten bewegt werden kann, um einzurichten, dass die sekundäre Stützkonstruktion (5) auf der primären Stützkonstruktion (1) aufzuliegen kommt.

7. Vorrichtung gemäß Anspruch 6, **dadurch gekennzeichnet, dass** die primäre Stützkonstruktion (1) mit einer Mehrzahl von zusätzlichen Konstruktionselementen (2) ausgestattet ist, die an der oberen Seite eine Mehrzahl von ersten Stützlinien (3) definieren, und dass alle von diesen ersten Stützlinien (3), die von den Konstruktionselementen (2) bestimmt werden, in einer imaginären Fläche liegen, die die vorbestimmte Gestalt hat.

8. Vorrichtung gemäß Anspruch 6 oder 7, **dadurch gekennzeichnet, dass** die sekundäre Stützkonstruktion eine Matte (5) ist, die von einer Mehrzahl von flexiblen Stangen (6) gebildet ist, die nebeneinander angeordnet sind,

9. Vorrichtung gemäß Anspruch 8, **dadurch gekennzeichnet, dass** die Mehrzahl von flexiblen Stangen (6) quer an der Mehrzahl von ersten Auflagerlinien (3) der Konstruktionselemente (2) der primären Stützkonstruktion (1) platziert sind, welche Stangen **dadurch** eine Mehrzahl von zweiten Auflagerlinien (6) bilden, die dazu dienen, das Paneel (4) abzustützen.

## Revendications

1. Procédé pour former un panneau a double courbure à partir d'un panneau plat, qui comprend l'étape consistant à traiter un panneau plat plastiquement déformable ou rendre le panneau plat plastiquement déformable pour lui permettre de se mouler lui-même à une forme prédéterminée qui est obtenue par une construction de support principale (1) coopérant avec une construction de support secondaire (5), **caractérisé en ce que** la construction de support principale (1) peut ou peut ne pas être ajustable à une position invariable qui détermine la forme, et la construction de support secondaire (5) est ajustable entre une position de départ dans laquelle elle supporte le panneau plat (4) et une position finale dans laquelle la construction de support secondaire (5) supporte le panneau à double courbure (4), alors que ladite construction de support (5) repose sur la construction de support principale (1) et est formée selon la forme de la construction de support principale (1), dans lequel l'ajustement de la position de départ à la position finale se produit au moins sous réserve de la distribution de la force gravitationnelle exercée sur la construction de support secondaire (5) par le panneau (4) alors que ce dernier est plastiquement déformable.

2. Procédé selon la revendication 1, **caractérisé en ce que** la construction de support principale (1) et la construction de support secondaire (5) définissent sensiblement des lignes de support se coupant transversalement (3, 6).

3. Procédé selon la revendication 1 ou 2, **caractérisé en ce que** la construction de support principale (1) peut être prévue avec une pluralité d'éléments de construction supplémentaires (2) qui, au niveau du côté supérieur, définissent une pluralité de premières lignes de support (3), et **en ce que** toutes ces premières lignes de support (3) déterminées par les éléments de construction (2) se trouvent dans un plan imaginaire ayant la forme prédéterminée.

4. Procédé selon l'une quelconque des revendications 1 à 3, **caractérisé en ce que** la construction de support secondaire est un mât comprenant une pluralité de tiges flexibles (6) disposées les unes à côté des autres.

5. Procédé selon la revendication 4, **caractérisé en ce que** la pluralité de tiges flexibles (6) sont placées transversalement sur la pluralité des premières lignes de support (3) des éléments de construction (2) de la construction de support principale (1), formant ainsi une pluralité de deuxièmes lignes de support (6) qui servent à supporter le panneau (4).

6. Appareil pour former un panneau à double courbure à partir d'un panneau plat, dans lequel ce dernier comprend une construction de support principale (1) qui peut être ou peut ne pas être ajustable selon une forme invariable avec le temps qui correspond à une double courbe souhaitable du panneau (4), ainsi qu'une construction de support secondaire (5) qui est conçue pour reposer sur la construction de support principale (1) et, sous réserve d'au moins une distribution de force gravitationnelle à partir d'un panneau (4) reposant sur la construction de support secondaire (5), est déformable selon une forme qui correspond à la forme invariable avec le temps de la construction de support principale (1), **caractérisé en ce que** la construction de support principale (1) peut être déplacée vers le haut ou la construction de support secondaire (5) peut être abaissée afin d'agencer le fait que la construction de support secondaire (5) vienne reposer sur la construction de support principale (1).

7. Appareil selon la revendication 6, **caractérisé en ce que** la construction de support principale (1) est prévue avec une pluralité d'éléments de construction supplémentaires (2) qui, au niveau du côté supérieur, définissent une pluralité de premières lignes de support (3), et **en ce que** toutes ces premières lignes de support (3) déterminées par les éléments de construction (2) se trouvent dans un plan imaginaire ayant la forme prédéterminée.

8. Appareil selon la revendication 6 ou 7, **caractérisé en ce que** la construction de support secondaire est un mât (5) composé d'une pluralité de tiges flexibles (6) disposées à proximité les unes des autres.

9. Appareil selon la revendication 8, **caractérisé en ce que** la pluralité de tiges flexibles (6) sont placées transversalement sur la pluralité de premières lignes de support (3) des éléments de construction (2) de la construction de support principale (1), lesquelles tiges forment ainsi une pluralité de deuxièmes lignes de support (6), qui servent à supporter le panneau (4).
